(19) Europäisches Patentamt
European Patent Office
Office européen des brevets

(11) **EP 4 310 147 A1**

(12) **EUROPEAN PATENT APPLICATION**
published in accordance with Art. 153(4) EPC

(43) Date of publication:
**24.01.2024 Bulletin 2024/04**

(51) International Patent Classification (IPC):
*C08L 77/06* (2006.01)    *C08G 69/26* (2006.01)
*C08K 3/105* (2018.01)

(21) Application number: **22771460.7**

(22) Date of filing: **16.03.2022**

(52) Cooperative Patent Classification (CPC):
**C08G 69/26; C08K 3/105; C08L 77/06**

(86) International application number:
**PCT/JP2022/011811**

(87) International publication number:
**WO 2022/196715 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.03.2021   JP 2021044984**

(71) Applicant: **Mitsui Chemicals, Inc.**
**Tokyo 104-0028 (JP)**

(72) Inventors:
• **DOI, Haruka**
  **Sodegaura-shi, Chiba 299-0265 (JP)**
• **MAKIGUCHI, Wataru**
  **Sodegaura-shi, Chiba 299-0265 (JP)**
• **NISHINO, Kohei**
  **Sodegaura-shi, Chiba 299-0265 (JP)**
• **WASHIO, Isao**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **POLYAMIDE RESIN COMPOSITION AND POLYAMIDE MOLDED ARTICLE**

(57)    Provided is a polyamide resin composition that, at high temperatures, suppresses reductions in tensile strength due to the addition of a copper-based heat-resistance stabilizer, and maintains a tensile strength over longer periods of time in a hot environment. The composition includes a polyamide resin and a copper-based heat-resistance stabilizer. The polyamide resin includes: a component unit (a) derived from dicarboxylic acid which is derived from an aromatic dicarboxylic acid or an alicyclic dicarboxylic acid; and greater than or equal to 10 mol% and less than 50 mol% of a component unit (b2), which is derived from 1,3-bis(aminomethyl)cyclohexane, with respect to the total number of moles of a component unit (b) derived from diamine. The content of copper included in the copper-based heat-resistance stabilizer is 0.001 parts by mass to 0.050 parts by mass, inclusive, with respect to 100 total parts by mass of the polyamide resin.

**Description**

Technical Field

The present invention relates to a polyamide resin composition and a polyamide molded article.

Background Art

In the related art, a polyamide resin composition, which excels in molding processability, mechanical and physical properties, and chemical resistance has been widely used as a material for various parts such as those for clothing, for industrial materials, for automobile, for electrical and electronics, and for industrial purposes.

Various additives are added to a polyamide resin composition in order to provide properties corresponding to respective applications to the polyamide resin composition. For example, it is known to add a copper-based heat-resistance stabilizer in order to improve the heat aging resistance or the like of a polyamide resin composition. For example, Patent Literature (hereinafter referred to as "PTL") 1 describes that the time until a tensile strength is halved when a thermal treatment is performed at 180°C can be extended to several hundred hours by adding a copper-based heat-resistance stabilizer.

In addition, an attempt has been made to change the physical properties of a polyamide resin by changing a raw material of the polyamide resin. For example, PTLs 2 and 3 describe a polyamide resin in which 1,3-bis(aminomethyl)cyclohexane is used as a diamine component used for manufacturing a polyamide by polycondensation of the diamine component and a dicarboxylic acid component. PTL 2 describes that the polyamide resin described therein has a high degree of transparency, and PTL 3 describes that the polyamide resin described therein has a high glass transition point and an improved crystallization capacity.

Incidentally, it is also known to blend a reinforcement such as glass fiber in order to enhance the impact resistance and the rigidity of a polyamide resin composition. The glass fiber may be treated with a sizing agent or a surface treatment agent for the purpose of enhancing the dispersibility in a polyamide resin, or the like. For example, PTL 1 describes a glass fiber sizing agent containing: a copolymer compound obtained by copolymerizing 20 to 60% by mass of an unsaturated dicarboxylic acid or carboxylic anhydride; 20 to 75 % by mass of methyl acrylate; and 5 to 20 % by mass of methyl methacrylate; aminosilane; and a polyurethane resin, and having a weight-average molecular weight of 10000 to 60000. PTL 1 describes that the sizing agent can enhance the mechanical strength (particularly, the tensile strength) of a polyamide resin to which glass fiber is added.

Citation List

Patent Literature

PTL 1
Japanese Patent Application Laid-Open No. H06-32979
PTL 2
Japanese Patent Application Laid-Open No. S49-55796
PTL 3
Japanese Patent Application Laid-Open No. 2017-075303
PTL 4
Japanese Patent Application Laid-Open No. 2014-231452

Summary of Invention

Technical Problem

As described in PTL 1, it is known that the heat aging resistance of a polyamide resin composition can be improved using a copper-based heat-resistance stabilizer. According to novel findings of the present inventors, however, there is a problem that the original tensile strength of a polyamide resin composition decreases due to the addition of a copper-based heat-resistance stabilizer. The problem of a decrease in tensile strength markedly occurs particularly when a molded article of a polyamide resin composition is used under a high-temperature environment. In addition, in recent years, there has been an increasing demand for further improving the long-term heat resistance of a polyamide resin composition, and there has been a demand for development of a polyamide resin composition capable of maintaining a predetermined tensile strength for a longer period of time under a high-temperature environment.

In view of these circumstances, an object of the present invention is to provide a polyamide resin composition that makes it possible to suppress a decrease in tensile strength at a high temperature due to the addition of a copper-based heat-resistance stabilizer and to maintain a predetermined tensile strength for a longer period of time under a high-temperature environment, and a polyamide molded article containing the polyamide resin composition.

Solution to Problem

[1] A polyamide resin composition containing:

a polyamide resin; and
a copper-based heat-resistance stabilizer, wherein
the polyamide resin contains:

a component unit (a) derived from a dicarboxylic acid; and
a component unit (b) derived from a diamine, wherein
the component unit (a) derived from the dicarboxylic acid includes a component unit derived from an aromatic dicarboxylic acid or an alicyclic dicarboxylic acid, and
the component unit (b) derived from the diamine includes:

more than 50 mol% and 90 mol% or less, based on a total number of moles of the component unit (b) derived from the diamine, of a component unit (b1) derived from an alkylenediamine having 4 or more and 18 or less carbon atoms; and
10 mol% or more and less than 50 mol%, based on the total number of moles of the component unit (b) derived from the diamine, of a component unit (b2) derived from 1,3-bis(aminomethyl)cyclohexane, and

a content of copper contained in the copper-based heat-resistance stabilizer is 0.001 parts by mass or more and 0.050 parts by mass or less based on 100 parts by mass of a content of the polyamide resin contained in the polyamide resin composition.

[2] The polyamide resin composition according to [1] containing 1 part by mass or more and 300 parts by mass or less, based on 100 parts by mass of the content of the polyamide resin contained in the polyamide resin composition, of glass fiber containing a surface treatment agent having an acidic group or of a sizing agent having an acidic group.
[3] The polyamide resin composition according to [2], wherein the acidic group is a carboxy group, an acid anhydride group, or an ester group.
[4] The polyamide resin composition according to any one of [1] to [3], wherein the polyamide resin contains 15 mol% or more and less than 45 mol%, based on the total number of moles of the component unit (b) derived from the diamine, of the component unit (b2) derived from 1,3-bis(aminomethyl)cyclohexane.
[5] The polyamide resin composition according to any one of [1] to [4], wherein the component unit (b1) derived from the alkylenediamine having 4 or more and 18 or less carbon atoms includes a component unit derived from a linear alkylenediamine or a branched alkylenediamine.
[6] The polyamide resin composition according to [5], wherein the linear alkylenediamine or the branched alkylenediamine is a diamine selected from the group consisting of 1,4-diaminobutane, 1,6-diaminohexane, 1,9-nonanediamine, 1,10-decanediamine, 2-methyl-1,5-pentanediamine, and 2-methyl-1,8-octanediamine.
[7] The polyamide resin composition according to any one of [1] to [6], wherein the aromatic dicarboxylic acid or the alicyclic dicarboxylic acid is terephthalic acid, naphthalenedicarboxylic acid or cyclohexanedicarboxylic acid.
[8] The polyamide resin composition according to any one of [1] to [7], wherein the polyamide resin composition is a resin composition for an in-vehicle member.
[9] A polyamide molded article containing the polyamide resin composition according to any one of [1] to [8].
[10] The polyamide molded article according to [9], wherein the polyamide molded article is an in-vehicle member.

Advantageous Effects of Invention

According to the present disclosure, it is possible to provide a polyamide resin composition capable of suppressing a decrease in tensile strength due to the addition of a copper-based heat-resistance stabilizer and maintaining a predetermined tensile strength for a longer period of time under a high-temperature environment, and a polyamide molded article containing the polyamide resin composition.

Description of Embodiments

In the present disclosure, a numerical range expressed using "to" means a range including numerical values described before and after the "to" as a minimum value and a maximum value, respectively.

In numerical ranges described in a stepwise manner in the present disclosure, an upper limit value or a lower limit value described in a certain numerical range may be replaced with an upper limit value or a lower limit value of another numerical range described in a stepwise manner. Further, in numerical ranges described in the present disclosure, an upper limit value or a lower limit value described in a certain numerical range may be replaced with values indicated in the examples.

1. Embodiment 1

Embodiment 1 of the present disclosure relates to a polyamide resin composition.

The polyamide resin composition is a resin composition in which a main component of a resin component is a polyamide resin. What is meant by the main component is that the proportion of the polyamide resin in the resin component is 50% by mass or more. The proportion of the polyamide resin in the resin component is preferably 60% by mass or more, more preferably 70% by mass or more, still more preferably 80% by mass or more, and particularly preferably 90% by mass or more. The upper limit of the proportion of the polyamide resin in the resin component is not particularly limited, but can be 100% by mass or less, and may be 90% by mass or less or may be 80% by mass or less.

The proportion of the polyamide resin contained in the polyamide resin composition is preferably 20% by mass or more to 80% by mass or less based on the total mass of the polyamide resin composition.

1-1. Polyamide Resin

The polyamide resin may be a polyamide resin containing a component unit (a) derived from a dicarboxylic acid and a component unit (b) derived from a diamine. In order to set the melting point (Tm) and the glass transition temperature (Tg) of the polyamide resin within the range described above, the component unit (a) derived from a dicarboxylic acid preferably includes a component unit derived from an aromatic dicarboxylic acid or an alicyclic dicarboxylic acid, and the component unit (b) derived from a diamine preferably includes more than 50 mol% and 90 mol% or less, based on a total number of moles of the component unit (b) derived from a diamine, of a component unit (b1) derived from an alkylenediamine having 4 or more and 18 or less carbon atoms, and 10 mol% or more and less than 50 mol%, based on the total number of moles of the component unit (b) derived from a diamine, of a component unit (b2) derived from 1,3-bis(aminomethyl)cyclohexane.

[Component Unit (a) Derived From Dicarboxylic Acid]

The melting point (Tm) and the crystalline property of the polyamide resin can be sufficiently enhanced when the polyamide resin contains the component unit derived from an aromatic dicarboxylic acid or an alicyclic dicarboxylic acid as the component unit (a) derived from a dicarboxylic acid.

Examples of the aromatic dicarboxylic acid include terephthalic acid, naphthalenedicarboxylic acid, and esters thereof. Examples of the alicyclic dicarboxylic acid include cyclohexanedicarboxylic acid and esters thereof. Among the above, from the viewpoint of obtaining a polyamide resin having a high crystalline property and a high heat resistance, or the like, the component unit (a) derived from a dicarboxylic acid preferably includes a component unit derived from an aromatic dicarboxylic acid, and more preferably includes a component unit derived from terephthalic acid.

The content of the component unit derived from an aromatic dicarboxylic acid or an alicyclic dicarboxylic acid (preferably the component unit derived from an aromatic dicarboxylic acid, and more preferably the component unit derived from terephthalic acid) is not particularly limited, but is preferably 50 mol% or more and 100 mol% or less based on the total number of moles of the component unit (a) derived from a dicarboxylic acid. When the content of the foregoing component unit is 50 mol% or more, the crystalline property of the polyamide resin is likely to be enhanced. From the same viewpoint, the content of the foregoing component unit is more preferably 70 mol% or more and 100 mol% or less.

In the present embodiment, the component unit (a) derived from a dicarboxylic acid preferably includes a component unit (a1) derived from terephthalic acid, naphthalenedicarboxylic acid or cyclohexanedicarboxylic acid. These component units (a1), unlike isophthalic acid, for example, can enhance the crystalline property of the polyamide. From the viewpoint of ensuring the crystalline property of the polyamide resin, the content of these component units (a1) is more than 20 mol% and 100 mol% or less based on the total number of moles of the component unit (a) derived from a dicarboxylic acid. From the viewpoint of further enhancing the crystalline property of the polyamide resin, the content of these component units (a1) is preferably 45 mol% or more and 100 mol% or less, more preferably 50 mol% or more and 99 mol% or less, still more preferably 80 mol% or more and 99 mol% or less, and particularly preferably 90 mol% or more and 99 mol% or less, based on the total number of moles of the component unit (a) derived from a dicarboxylic acid.

The component unit (a) derived from a dicarboxylic acid may include an aromatic dicarboxylic acid component unit (a2) other than the component unit (a1) described above, or an aliphatic dicarboxylic acid component unit (a3) having 4 or more and 20 or less carbon atoms, as long as the effect disclosed herein is not impaired. From the viewpoint of not impairing the crystalline property of the resin, however, the content of a component unit derived from isophthalic acid or of a component unit derived from an aliphatic dicarboxylic acid having 4 or more and 18 or less carbon atoms other than adipic acid is preferably small. Specifically, the content thereof is preferably 20 mol% or less, and more preferably 10 mol% or less, based on the total number of moles of the component unit (a) derived from a dicarboxylic acid.

Examples of the aromatic dicarboxylic acid component unit (a2) other than terephthalic acid include a component unit derived from isophthalic acid and a component unit derived from 2-methylterephthalic acid. Among these, the component unit derived from isophthalic acid is preferred. From the viewpoint of ensuring the crystalline property of the polyamide resin, the content of these component units (a2) is preferably 1 mol% or more and 50 mol% or less, more preferably 1 mol% or more and 20 mol% or less, still more preferably 1 mol% or more and 10 mol% or less, and particularly preferably 1 mol% or more and 5 mol% or less, based on the total number of moles of the component unit (a) derived from a dicarboxylic acid.

The component unit (a3) derived from an aliphatic dicarboxylic acid is a component unit derived from an aliphatic dicarboxylic acid having an arkylene group having 4 or more and 20 or less carbon atoms, and is preferably a component unit derived from an aliphatic dicarboxylic acid having an arkylene group having 6 or more and 12 or less carbon atoms. Examples of the aliphatic dicarboxylic acid include malonic acid, dimethylmalonic acid, succinic acid, glutaric acid, adipic acid, 2-methyladipic acid, trimethyladipic acid, pimelic acid, 2,2-dimethylglutaric acid, 3,3-diethyl succinic acid, azelaic acid, sebacic acid, and suberic acid component units. Among these, adipic acid and sebacic acid are preferred. From the viewpoint of ensuring the crystalline property of the polyamide resin, the content of these component units (a3) is preferably 0 mol% or more and 40 mol% or less, more preferably 0 mol% or more and 20 mol% or less, still more preferably 1 mol% or more and 10 mol% or less, and particularly preferably 1 mol% or more and 5 mol% or less, based on the total number of the component unit (a) derived from a dicarboxylic acid.

The semi-aromatic polyamide resin (A) may further contain, in addition to the component units (a1), (a2), and (a3), a small amount of a tribasic or higher polyvalent carboxylic acid component unit such as trimellitic acid or pyromellitic acid. The content of such a polyvalent carboxylic acid component unit can be 0 mol% or more and 5 mol% or less based on the total number of moles of the component unit (a) derived from a dicarboxylic acid.

[Component Unit (b) Derived From Diamine]

The glass transition temperature (Tg) of a polyamide resin that contains, as the component unit (b) derived from a diamine, the component unit (b2) derived from 1,3-bis(aminomethyl)cyclohexane in addition to the component unit (b1) derived from an alkylenediamine having 4 or more and 18 or less carbon atoms, can be sufficiently increased.

That is, the component unit (b2) derived from 1,3-bis(aminomethyl)cyclohexane has a non-linear structure and therefore reduces the motion property of a molecular chain of a polyamide resin. Accordingly, the component unit (b2) derived from 1,3-bis(aminomethyl)cyclohexane may cause the glass transition temperature (Tg) of a polyamide resin containing the above component unit (b2) to be higher than that of a polyamide resin free of the above component unit (b2). Thus, it is also considered that a polyamide resin containing the above component unit (b2) has a high mechanical strength even under a high-temperature and high-humidity environment, and can maintain this high mechanical strength for a long period of time.

Further, the component unit (b2) derived from 1,3-bis(aminomethyl)cyclohexane may cause the melting point (Tm) of a polyamide resin containing the above component unit (b2) to be moderately reduced than that of a polyamide resin free of the above component unit (b2). Thus, a polyamide resin containing the above component unit (b2) has a high flowability at the time of injection molding and also has a high molding processability.

Incidentally, according to the findings of the present inventors, the copper-based heat-resistance stabilizer to be described later exhibits a high effect of enhancing the stability of a polyamide resin composition at a high temperature (for example, 150°C or more) in comparison with an organic heat-resistance stabilizer, and therefore may more effectively enhance the heat aging resistance of the polyamide resin composition. Having said that, since the copper-based heat-resistance stabilizer is a compound which itself is a foreign substance in the resin composition and contains metal greatly different in nature from resin, the copper-based heat-resistance stabilizer is likely to greatly decrease the crystalline property of the polyamide resin and to decrease the original tensile strength of the polyamide resin composition from the initial stage of manufacture. Further, under a high-temperature environment in which the flowability of resin is high, the copper-based heat-resistance stabilizer, which is a foreign substance, is likely to move more freely in the composition and the elongation/shrinkage and crystallization of the resin molecule is more likely to be inhibited due to the movement described above, and thus, and thus, the decrease in tensile strength is more markedly to appear. On the other hand, the component unit (b2) derived from 1,3-bis(aminomethyl)cyclohexane limits the aforementioned movement of the copper-based heat-resistance stabilizer under a high-temperature environment by increasing the glass transition temperature of the polyamide resin. Thus, it is considered that the inhibition of the elongation/shrinkage and crystallization of the resin molecule due to the copper-based heat-resistance stabilizer is unlikely to occur and a decrease in the tensile strength of the polyamide resin composition under a high-temperature environment is suppressed.

In addition, the component unit (b2) derived from 1,3-bis(aminomethyl)cyclohexane has a cyclic structure and is therefore unlikely to cause cleavage of the molecular chain of the resin or the like even when being left under a high-temperature environment for a long time, and enhances the long-term heat resistance of the polyamide resin itself. Accordingly, it is considered that the component unit (b2) derived from 1,3-bis(aminomethyl)cyclohexane is likely to maintain the tensile strength of a molded article of the polyamide resin composition for a longer period of time even under a high-temperature environment.

Further, the component unit (b2) derived from 1,3-bis(aminomethyl)cyclohexane bends the molecular chain of the polyamide resin to suppress intrusion of moisture into the polyamide resin composition. Thus, the component unit (b2) derived from 1,3-bis(aminomethyl)cyclohexane causes the polyamide resin to be unlikely to be hydrolyzed. Thus, it is considered that a decrease in the mechanical strength (in particular the tensile strength) of a molded article of the polyamide resin composition, in particular under a high-temperature and high-humidity environment, is suppressed.

In addition, the polyamide resin has crystalline property due to the component unit (b1) derived from an alkylenediamine having 4 or more and 18 or less carbon atoms, and therefore has a high flowability at the time of injection molding and a high mechanical strength. Further, it is considered that the polyamide resin has a high glass transition temperature (Tg) and therefore has high mechanical strengths even in a high temperature region, and is likely to hold these high mechanical strengths.

The number of carbon atoms of the alkylenediamine having 4 or more and 18 or less carbon atoms serving as a raw material of the component unit (b1) is more preferably 4 or more and 10 or less carbon atoms from the viewpoint of causing the Tg of a resin to unlikely to decrease.

The alkylenediamine having 4 or more and 18 or less carbon atoms may include a linear alkylenediamine or a branched alkylenediamine. From the viewpoint of enhancing the crystalline property of the resin, the alkylenediamine having 4 or more and 18 or less carbon atoms preferably includes a linear alkylenediamine. That is, the component unit derived from an alkylenediamine having 4 or more and 18 or less carbon atoms preferably includes a component unit derived from a linear alkylenediamine.

Examples of the alkylenediamine having 4 or more and 18 or less carbon atoms include: linear alkylenediamines including 1,4-diaminobutane, 1,6-diaminohexane, 1,7-diaminoheptane, 1,8-octanediamine, 1,9-nonanediamine, and 1,10-decanediamine, and the like; and branched alkylenediamines including 2-methyl-1,5-pentanediamine, and 2-methyl-1,8-octanediamine, and the like. Among these, 1,4-diaminobutane, 1,6-diaminohexane, 1,9-nonanediamine, 1,10-decanediamine, 2-methyl-1,5-pentanediamine, and 2-methyl-1,8-octanediamine are preferred, and 1,6-diaminohexane and 1,10-decanediamine are preferred. One of these alkylenediamines may be used, or two or more thereof may be used.

The content of the component unit (b1) derived from an alkylenediamine having 4 or more and 18 or less carbon atoms is preferably more than 50 mol% and 90 mol% or less based on the total number of moles of the component unit (b) derived from a diamine. When the above content is more than 50 mol%, the crystalline property of the polyamide resin can be sufficiently enhanced to further enhance the flowability of the resin at the time of injection molding and the mechanical strength thereof. When the above content is 90 mol% or less, the content of the component unit (b2) derived from 1,3-bis(aminomethyl)cyclohexane can be increased. Thus, it is possible to enhance the molding processability of the polyamide resin by increasing the glass transition temperature (Tg) of the polyamide resin, enhancing the mechanical strength of the polyamide resin in a high temperature region, and appropriately reducing the (Tm) of the polyamide resin.

The content of the component unit (b2) derived from 1,3-bis(aminomethyl)cyclohexane is, on the other hand, preferably 10 mol% or more and less than 50 mol% based on the total number of moles of the component unit (b) derived from a diamine. When the above content is 10 mol% or more, it is possible to enhance the molding processability of the polyamide resin by increasing the glass transition temperature (Tg) of the polyamide resin, enhancing the mechanical strength of the polyamide resin in a high temperature region, and appropriately reducing the (Tm) of the polyamide resin. When the above content is less than 50 mol%, the content of the component unit (b1) derived from an alkylenediamine having 4 or more and 18 or less carbon atoms can be increased. Thus, it is possible to sufficiently enhance the crystalline property of the polyamide resin and to further enhance the mechanical strength of a molded body, and it is also possible to suppress a decrease in the flowability of the polyamide resin itself due to the component unit (b2) derived from 1,3-bis(aminomethyl)cyclohexane.

From the viewpoint described above, the content of the component unit (b1) derived from an alkylenediamine having 4 or more and 18 or less carbon atoms is preferably more than 50 mol% and 90 mol% or less, more preferably 55 mol% or more and 85 mol% or less, and still more preferably 60 mol% or more and 80 mol% or less, based on the total number of moles of the component unit (b) derived from a diamine.

In addition, from the viewpoint described above, the content of the component unit (b2) derived from 1,3-bis(aminomethyl)cyclohexane is preferably 10 mol% or more and less than 50 mol%, more preferably 15 mol% or more and less than 45 mol%, still more preferably 20 mol% or more and 40 mol% or less, further more preferably 20 mol% or more and 38 mol% or less, and particularly preferably 20 mol% or more and 33 mol% or less, based on the total number of moles of the component unit (b) derived from a diamine.

The component unit (b) derived from a diamine may further include a component unit (b3) derived from another diamine as long as the effect disclosed herein is not impaired. Examples of another diamine include an aromatic diamine and an alicyclic diamine. The content of the component unit (b3) derived from another diamine may be 50 mol% or less based on the total number of moles of the component unit (b) derived from a diamine.

From the viewpoint of enhancing the thermal stability of a compound or the thermal stability at the time of molding and further enhancing the mechanical strength, terminal groups of at least some molecules of a polyamide resin may be blocked with a terminal blocking agent. For example, in a case where a terminal of a molecule is a carboxyl group, the terminal blocking agent is preferably a monoamine, and in a case where a terminal of a molecule is an amino group, the terminal blocking agent is preferably a monocarboxylic acid.

Examples of the monoamine include: aliphatic monoamines including methylamine, ethylamine, propylamine, butylamine, and the like; alicyclic monoamines including cyclohexylamine, dicyclohexylamine, and the like; and aromatic monoamines including aniline, toluidine, and the like. Examples of the monocarboxylic acid include: aliphatic monocarboxylic acids having 2 or more and 30 or less carbon atoms, including acetic acid, propionic acid, butyric acid, valeric acid, caproic acid, caprylic acid, lauric acid, tridecylic acid, myristic acid, palmitic acid, stearic acid, oleic acid, linoleic acid, and the like; aromatic monocarboxylic acids including benzoic acid, toluic acid, naphthalenecarboxylic acid, methylnaphthalenecarboxylic acid, phenylacetic acid, and the like; and alicyclic monocarboxylic acids including cyclohexanecarboxylic acid and the like. The aromatic monocarboxylic acid and the alicyclic monocarboxylic acid may have a substituent at the cyclic structure moiety.

[Physical Properties]

For the polyamide resin, the melting point (Tm) measured using a differential scanning calorimeter (DSC) can be 280°C or more and 330°C or less, and the glass transition temperature (Tg) measured using the DSC can be 135°C or more and 180°C or less.

When the melting point (Tm) of the polyamide resin is 280°C or more, the mechanical strength and the heat resistance of the polyamide resin composition or a molded article in a high temperature region are unlikely to be impaired. In addition, when the melting point (Tm) of the polyamide resin is 330°C or less, it is not necessary to excessively increase the molding temperature, and thus, the molding processability of the polyamide resin composition is likely to be favorable. From the viewpoint described above, the melting point (Tm) of the polyamide resin is more preferably 290°C or more and 330°C or less, and still more preferably 300°C or more and 330°C or less.

When the glass transition temperature (Tg) of the polyamide resin is 135°C or more, the heat resistance of the polyamide resin composition or a molded article is unlikely to be impaired, and at the same time the mechanical strength in a high temperature region can be further enhanced. When the glass transition temperature (Tg) of the polyamide resin is 180°C or less, the molding processability of the polyamide resin composition is likely to be favorable. From the viewpoint described above, the glass transition temperature (Tg) of the polyamide resin is more preferably 140°C or more and 170°C or less.

When the glass transition temperature (Tg) of the polyamide resin is 135°C or more and the difference between the melting point (Tm) and the glass transition temperature (Tg) of the polyamide resin is 170°C or less, it is possible to achieve both a high mechanical strength of the polyamide resin composition in a high temperature region and a high heat-resistance curable property thereof due to suppression of decomposition by the copper-based heat-resistance stabilizer, and it is also possible to suppress a decrease in the flowability at the time of injection molding due to the addition of glass fiber treated with a sizing agent or a surface treatment agent, which has an acidic group. From the viewpoint described above, it is preferred that the glass transition temperature (Tg) be 140°C or more and that the difference between the melting point (Tm) and the glass transition temperature (Tg) of the polyamide resin be 120°C or more and 170°C or less, and it is still more preferred that the glass transition temperature (Tg) be 150°C or more and that the difference between the melting point (Tm) and the glass transition temperature (Tg) of the polyamide resin be 130°C or more and 165°C or less.

The enthalpy of fusion ($\Delta H$) of the crystalline polyamide resin is preferably 10 mJ/mg or more. A crystalline polyamide resin having an enthalpy of fusion ($\Delta H$) of 10 mJ/mg or more has crystalline property, and thus, the flowability at the time of injection molding and the mechanical strength are likely to be enhanced. From the same viewpoint, the enthalpy of fusion ($\Delta H$) of the crystalline polyamide resin is more preferably 15 mJ/mg or more, and still more preferably 20 mJ/mg or more. Note that, the upper limit of the enthalpy of fusion ($\Delta H$) of the crystalline polyamide resin is not particularly limited, but may be 90 mJ/mg from the viewpoint of not impairing the molding processability.

Note that, the enthalpy of fusion ($\Delta$H), the melting point (Tm), and the glass transition temperature (Tg) of the polyamide resin can be measured using a differential scanning calorimeter (DSC220C type, manufactured by Seiko Instruments Inc.).

Specifically, approximately 5 mg of a polyamide resin are hermetically sealed in an aluminum pan for measurement and heating to 350°C at 10°C/min from room temperature is performed. To allow the resin to melt completely, the resin is held at 360°C for 3 minutes, and then cooled to 30°C at 10°C/min. After allowed to stand at 30°C for 5 minutes, second heating is performed to 360°C at 10°C/min. The temperature (°C) of an endothermic peak in the second heating is defined as the melting point (Tm) of the crystalline polyamide resin, and the displacement point corresponding to the glass transition is defined as the glass transition temperature (Tg) thereof. The enthalpy of fusion ($\Delta$H) is determined from the area of the endothermic peak of crystallization in the first temperature rising process in accordance with JIS K 7122.

The melting point (Tm), the glass transition temperature (Tg), and the enthalpy of fusion ($\Delta$H) of the crystalline polyamide resin can be adjusted by the structure of the component unit (a) derived from a dicarboxylic acid, the content of the component unit (b2) derived from a diamine represented by formula (1), the content ratio of the component unit (b1) derived from an alkylenediamine having 4 or more and 18 or less carbon atoms to the component unit (b2) derived from a diamine represented by formula (1), and the number of carbon atoms of the alkylenediamine having 4 or more and 18 or less carbon atoms.

In addition, in order to increase the enthalpy of fusion ($\Delta$H) of the crystalline polyamide resin, it is preferable that the content of the component unit (b2) and the content ratio thereof (the ratio of the component unit (b2) to the total number of moles of the component unit (b) derived from a diamine) are reduced. In order to increase the glass transition temperature (Tg) of the crystalline polyamide resin and to decrease the melting point (Tm) thereof, on the other hand, it is preferable that the content of the component unit (b2) and the content ratio thereof (the ratio of the component unit (b2) to the total number of moles of the component unit (b) derived from a diamine), for example, is increased.

The intrinsic viscosity [$\eta$] of the crystalline polyamide resin, which is measured in 96.5% sulfuric acid at a temperature of 25°C, is preferably 0.6 dl/g or more and 1.5 dl/g or less. When the intrinsic viscosity [$\eta$] of the crystalline polyamide resin is 0.6 dl/g or more, the mechanical strength (such as toughness) of a molded article is likely to be sufficiently enhanced, and when the intrinsic viscosity [$\eta$] of the crystalline polyamide resin is 1.5 dl/g or less, the flowability of the resin composition at the time of molding is unlikely to be impaired. From the same viewpoint, the intrinsic viscosity [$\eta$] of the crystalline polyamide resin is more preferably 0.8 dl/g or more and 1.2 dl/g or less. The intrinsic viscosity [$\eta$] can be adjusted with a terminal blocking amount of the crystalline polyamide resin or the like.

The intrinsic viscosity of the crystalline polyamide resin can be measured in accordance with JIS K6810-1977.

Specifically, 0.5 g of the crystalline polyamide resin are dissolved in 50 ml of a 96.5% sulfuric acid solution to prepare a sample solution. The intrinsic viscosity can be calculated by measuring the flow-down time (sec) of the sample solution under a condition of 25±0.05°C using an Ubbelohde viscometer, and fitting the resulting value to the following equation:

$$[\eta] = \eta SP/[C(1+0.205\eta SP)].$$

In the equation described above, the algebras or variables represent:

[$\eta$]: intrinsic viscosity (dl/g),
$\eta$SP: specific viscosity, and
C: sample concentration (g/dl).

$\eta$SP is determined by the following equation:

$$\eta SP = (t-t0)/t0$$

where t: flow-down time (sec) of sample solution, and
t0: flow-down time (sec) of blank sulfuric acid.

[Manufacturing Method]

The polyamide resin can be manufactured by, for example, polycondensation of the dicarboxylic acid described above and the diamine described above in a homogeneous solution. Specifically, the polyamide resin can be manufactured by heating a dicarboxylic acid and a diamine in the presence of a catalyst as described in WO 03/085029 to obtain a low-order condensate, and then imparting a shear stress to a melt of the low-order condensate and subjecting the melt to polycondensation.

From the viewpoint of adjusting the intrinsic viscosity of the polyamide resin or the like, the terminal blocking agent described above may be added to a reaction system. The intrinsic viscosity [η] (or molecular weight) of the polyamide resin can be adjusted with the addition amount of the terminal blocking agent.

The terminal blocking agent is added to a reaction system of a dicarboxylic acid and a diamine. The addition amount thereof is preferably 0.07 mol or less, and more preferably 0.05 mol or less, based on 1 mol of the total amount of the dicarboxylic acid.

1-2. Heat-Resistance Stabilizer

The copper-based heat-resistance stabilizer is contained together with the component unit (b2) derived from 1,3-bis(aminomethyl)cyclohexane in the polyamide resin composition and thus can improve the flowability of the polyamide resin composition at the time of molding. It is considered that this improvement in flowability is obtained because entanglement of molecular chains is suppressed due to the component unit derived from 1,3-bis(aminomethyl)cyclohexane, and thus the effect of decreasing the viscosity due to the addition of the copper-based heat-resistance stabilizer is more remarkably attained. Further, the copper-based heat-resistance stabilizer improves the heat aging resistance of the resin composition.

The copper-based heat-resistance stabilizer preferably contains: (i) a salt of halogen and a metal element of Group 1 or 2 in the Periodic Table of Elements, that is, a halogen metal salt; and (ii) a copper compound, and further, as needed, preferably also contains (iii) a higher fatty acid metal salt.

Examples of (i) the halogen metal salt include potassium iodide, potassium bromide, potassium chloride, sodium iodide, and sodium chloride. Among these, potassium iodide and potassium bromide are preferred. Only one of the halogen metal salts may be contained, or two or more thereof may be contained.

Examples of (ii) the copper compound include a halide of copper, a salt of copper (such as a sulfate, an acetate, a propionate, a benzoate, an adipate, a terephthalate, a salicylate, a nicotinate, and a stearate), and a chelating compound of copper (a compound of copper and ethylenediamine, ethylenediaminetetraacetic acid, or the like). Among these, copper iodide, cuprous bromide, cupric bromide, cuprous chloride, and copper acetate are preferred. Only one of the copper compounds may be contained, or two or more thereof may be contained.

The content mass ratio of (i) the halogen metal salt to (ii) the copper compound may be adjusted such that the molar ratio of halogen to copper is 0.1/1 to 200/1, preferably 0.5/1 to 100/1, and more preferably 2/1 to 40/1, from the viewpoint of easily improving the heat resistance of a molded article and the corrosiveness thereof at the time of manufacture.

Examples of (iii) the higher fatty acid metal salt include a higher saturated fatty acid metal salt and a higher unsaturated fatty acid metal salt.

The higher saturated fatty acid metal salt is preferably a metal salt of a saturated fatty acid having 6 to 22 carbon atoms and a metal element (M1) such as an element of Groups 1, 2 and 3 in the Periodic Table of Elements, zinc, and aluminum. Such a higher saturated fatty acid metal salt is represented by following equation (1):

$$CH_3(CH_2)_nCOO(M1) \ldots \qquad (1)$$

where the metal element (M1) is an element of Groups 1, 2 and 3 in the Periodic Table of Elements, zinc, or aluminum, and n may be 8 to 30.

Examples of the higher saturated fatty acid metal salt include lithium, sodium, magnesium, calcium, zinc and aluminum salts of capric, uradecyl, lauric, tridecyl, myristic, pentadecylic, palmitic, heptadecylic, stearic, nonadecanoic, arachic, behenic, lignoceric, cerotic, heptacosanoic, montanic, melissic, and lacceric acids.

The higher unsaturated fatty acid metal salt is preferably a metal salt of an unsaturated fatty acid having 6 to 22 carbon atoms and the metal element (M1) such as an element of Groups 1, 2 and 3 in the Periodic Table of Elements, zinc, or aluminum.

Examples of the higher unsaturated fatty acid metal salt include lithium, sodium, magnesium, calcium, zinc and aluminum salts of undecylenic, oleic, elaidic, cetoleic, erucic, brassidic, sorbic, linoleic, linolenic, arachidonic, stearolic, 2-hexadecenoic, 7-hexadecenoic, 9-hexadecenoic, gadoleic, gadoelaidic, and 11-eicosenoic acids.

Examples of the copper-based heat-resistance stabilizer include a mixture of 10% by mass of copper (I) iodide and 90% by mass of potassium iodide, and a mixture of 14.3% by mass of copper (I) iodide and 85.7% by mass of potassium iodide/calcium distearate (mass ratio: 98:2).

The content of the copper-based heat-resistance stabilizer in the resin composition can be 0.01% by mass or more and 3% by mass or less, preferably 0.1% by mass or more and 3% by mass or less, and more preferably 0.1% by mass or more and 0.5% by mass or less, based on the total mass of the resin composition. When the blending amount of the copper-based heat-resistance stabilizer is 0.01% by mass or more based on the total mass of the resin composition, the flowability and the heat aging resistance of the resin composition can be further enhanced. In addition, when the blending amount of the copper-based heat-resistance stabilizer is 3% by mass or less, the mechanical strength of the molded article is unlikely to be impaired.

Further, when the total content of all polyamide resins contained in the polyamide resin composition is 100 parts by mass, the content of copper contained in the copper-based heat-resistance stabilizer in the resin composition is 0.001 parts by mass or more and 0.050 parts by mass or less, preferably 0.002 parts by mass or more and 0.040 parts by mass or less, more preferably 0.003 parts by mass or more and 0.030 parts by mass or less, and still more preferably 0.005 parts by mass or more and 0.025 parts by mass or less. When the content of copper contained in the copper-based heat-resistance stabilizer is 0.001% by mass or more based on 100 parts by mass of the polyamide resin, the flowability and the heat aging resistance of the resin composition can be further enhanced. Further, when the content of copper contained in the copper-based heat-resistance stabilizer is 0.050% by mass or less based on 100 parts by mass of the polyamide resin, the mechanical strength of the molded article is unlikely to be impaired.

1-3. Fiber Glass

The polyamide resin composition may contain glass fiber.

It is known to blend a reinforcement such as glass fiber in order to enhance the impact resistance and the rigidity of a polyamide resin composition. The glass fiber may be treated with a sizing agent or a surface treatment agent for the purpose of enhancing the dispersibility in a polyamide resin, or the like (PTL 4 or the like). According to novel findings of the present inventors, however, addition of glass fiber treated with a sizing agent having an acidic group such as a carboxyl group, an acid anhydride group and an ester group to a polyamide resin composition may cause a decrease in the flowability of the polyamide resin composition. The decrease in flowability is also observed when glass fiber treated with a sizing agent or a surface treatment agent, which has another acidic group, is added to a polyamide resin composition.

According to the findings of the present inventors, it is considered that a decrease in the flowability of a polyamide resin composition when glass fiber treated with a sizing agent or a surface treatment agent, which has an acidic group, is added is caused by the fact that the acidic group of the sizing agent or the surface treatment agent reacts with an amino terminal of the polyamide resin when the polyamide resin composition is melt. The reaction causes the polyamide resin and the glass fiber to be bonded via the sizing agent or the surface treatment agent to increase the apparent molecular weight of the polyamide resin. Then, the flowability of the polyamide resin composition decreases due to the increase in the apparent molecular weight. On the other hand, the component unit (b2) derived from 1,3-bis(aminomethyl)cyclohexane inhibits the aforementioned reaction of the acidic group of the sizing agent or the surface treatment agent with the amino terminal of the polyamide resin by bending the molecular chain of the polyamide resin to cause moderate steric hindrance. It is considered that an increase in the apparent molecular weight of the polyamide resin is suppressed thereby to suppress a decrease in the flowability of the polyamide resin composition when a sizing agent or a surface treatment agent, which has an acidic group, is used.

The type of the glass fiber is not particularly limited as long as the glass fiber is used for reinforcing resin, and may be a chopped strand or a milled fiber having a shorter fiber length. In addition, the cross-sectional shape of the glass fiber may be a circular shape or a non-circular shape such as an oval shape or an elliptical shape.

From the viewpoint of enhancing the moldability of the resin composition and enhancing the mechanical strength and the heat resistance of an obtained molded article, the average fiber length of the glass fiber may be, for example, 1 $\mu$m or more and 20 mm or less, and preferably 5 $\mu$m or more and 10 mm or less. Further, the aspect ratio of the glass fiber may be, for example, 5 or more and 2000 or less, and preferably 30 or more and 600 or less.

The average fiber length and the average fiber diameter of the glass fiber can be measured by the following methods.

1) The resin composition is dissolved in a hexafluoroisopropanol/chloroform solution (0.1/0.9% by volume) and then filtered, and a resulting filtrate is collected, and
2) The filtrate obtained in 1) is dispersed in water, and the fiber lengths (Li) and the fiber diameters (di) of arbitrary 300 fibers are measured using an optical microscope (magnification: 50 times), respectively. The number of fibers having a fiber length of Li is set to be qi, the weight-average length (Lw) is calculated based on the following equation, and the calculated value is defined as the average fiber length of the glass fiber.

$$\text{Weight-averaged length (Lw)} = (\Sigma qi \times Li^2)/(\Sigma qi \times Li)$$

In the same manner, the number of fibers having a fiber diameter of Di is set to be ri, the weight-average diameter (Dw) is calculated based on the following equation, and the calculated value is defined as the average fiber diameter of the glass fiber.

$$\text{Weight-averaged diameter (Dw)} = (\Sigma ri \times Di^2)/(\Sigma ri \times Di)$$

The content of the glass fiber is not particularly limited, but can be set to be, for example, 15% by mass or more and 70% by mass or less, preferably 15% by mass or more and 50% by mass or less, and more preferably 20% by mass or more and 50% by mass or less, based on the total mass of the polyamide resin composition.

Further, the content of the glass fiber is not particularly limited, but is 1 part by mass or more and 300 parts by mass or less, preferably 10 parts by mass or more and 270 parts by mass or less, more preferably 20 parts by mass or more and 250 parts by mass or less, and still more preferably 30 parts by mass or more and 100 parts by mass or less, when the total content of all polyamide resins contained in the polyamide resin composition is 100 parts by mass.

The glass fiber contains a surface treatment agent or a sizing agent.

The surface treatment agent or the sizing agent may be a publicly known surface treatment agent or a publicly known sizing agent, which is used for glass fiber to be blended in a polyamide resin composition. Having said that, the surface treatment agent or the sizing agent has an acidic group. Examples of the acidic group include a carboxy group, an acid anhydride group, an ester group, and a sulfonic acid group. Among these, a carboxy group, an acid anhydride group, and an ester group are preferred, and a carboxy group and an acid anhydride group are more preferred. The ester group may be a functional group derived from a carboxylic ester.

Examples of the surface treatment agent having an acidic group include a silane coupling agent containing an acid anhydride group such as 3-trimethoxysilylpropylsuccinic anhydride.

Examples of the sizing agent having an acidic group include a sizing agent containing a homopolymer or copolymer of an unsaturated carboxylic acid or a copolymer of an unsaturated carboxylic acid or an anhydride thereof and an unsaturated monomer.

Examples of the unsaturated carboxylic acid include acrylic acid, methacrylic acid, cinnamic acid, itaconic acid, fumaric acid, mesaconic acid, citraconic acid and maleic acid. Examples of the unsaturated carboxylic anhydride include maleic anhydride, itaconic anhydride, and dodecenylsuccinic anhydride. Among these, acrylic acid, methacrylic acid, maleic acid and maleic anhydride are preferred.

Examples of the unsaturated monomer include styrene, butadiene, acrylonitrile, vinyl acetate, methyl acrylate, ethyl acrylate, methyl methacrylate, ethyl methacrylate, methyl styrene, ethylene, propylene, butylene, isobutylene, and vinyl ether. Among these, methyl acrylate and methyl methacrylate are preferred, and both methyl acrylate and methyl methacrylate are more preferably contained.

When the sizing agent contains the aforementioned copolymer of an unsaturated carboxylic acid or an anhydride thereof and an unsaturated monomer, the ratio of the aforementioned unsaturated carboxylic acid or anhydride thereof to the total mass of the aforementioned copolymer is preferably 20% by mass or more and 60% by mass or less. When the ratio is 20% by mass or more, the effect of improving the mechanical strength of the polyamide resin composition by enhancing the chemical interaction with the polyamide resin due to the acidic group (carboxy group) is remarkable. When the ratio is 60% by mass or less, the effect of improving the mechanical strength of the polyamide resin composition by increasing the molecular weight (chain length) of the copolymer to enhance the physical interaction with the polyamide resin is remarkable.

The homopolymer or the copolymer may be used in combination with another resin such as a urethane resin and an epoxy resin.

(Manufacturing Method)

The glass fiber containing the surface treatment agent or the sizing agent can be obtained, for example, by applying (imparting) the surface treatment agent or the sizing agent to a fiber strand by means of a publicly known method such as a roller-type applicator during a step of manufacturing the glass fiber, drying the fiber strand, and subjecting the fiber strand to a reaction.

The adhesion amount of the surface treatment agent or the sizing agent is at a solid fraction of preferably 0.2 parts by mass or more and 3 parts by mass or less, more preferably 0.2 parts by mass or more and 2 parts by mass or less, and still more preferably 0.3 parts by mass or more and 2 parts by mass or less, based on 100 parts by mass of the glass fiber. When the adhesion amount is 0.2 parts by mass or more, the convergence of the glass fiber further improves. Further, when the adhesion amount is 2 parts by mass or less, the thermal stability of the resin composition further improves.

1-4. Other Component

The polyamide resin composition may contain any other publicly known component.

Examples of the other component include a reinforcement, a crystal nucleating agent, a lubricant, a flame retardant, a corrosion resistance improver, a drip preventing agent, an ion scavenger, an elastomer (rubber), an antistatic agent, a mold release agent, an antioxidant (such as phenols, amines, sulfurs, and phosphorouses), a heat-resistance stabilizer (such as a lactone compound, vitamin E, hydroquinones, copper halide, and an iodine compound), a light stabilizer (such as benzotriazoles, triazines, benzophenones, benzoates, hindered amines, and oxanilides), and other polymers (polyolefines, an olefin copolymer such as an ethylene-propylene copolymer and an ethylene-1-butene copolymer, an olefin copolymer such as a propylene-1-butene copolymer, polystyrene, polyamide, polycarbonate, polyacetal, polysulfone, polyphenylene oxide, a fluororesin, a silicone resin, and LCP). Among these, the resin composition of the present disclosure preferably further contains a reinforcement from the viewpoint of increasing the mechanical strength of a molded article.

The reinforcement may impart a high mechanical strength to the resin composition. Examples of the reinforcement include: a fibrous reinforcement such as glass fiber, wollastonite, potassium titanate whisker, calcium carbonate whisker, aluminum borate whisker, magnesium sulfate whisker, zinc oxide whisker, milled fiber, and cut fiber; and a granular reinforcement. One of these reinforcements may be used alone or two or more thereof may be used in combination. Among these, wollastonite, glass fiber, and potassium titanate whisker are preferred and wollastonite or glass fiber is more preferred since the mechanical strength of a molded article is easily enhanced thereby.

From the viewpoints of the moldability of the resin composition and the mechanical strength and the heat resistance of an obtained molded article, the average fiber length of the fibrous reinforcement may be, for example, 1 $\mu$m or more and 20 mm or less, and preferably 5 $\mu$m or more and 10 mm or less. Further, the aspect ratio of the fibrous reinforcement may be, for example, 5 or more and 2000 or less, and preferably 30 or more and 600 or less.

The average fiber length and the average fiber diameter of the fibrous reinforcement can be measured by the following methods.

1) The resin composition is dissolved in a hexafluoroisopropanol/chloroform solution (0.1/0.9% by volume) and then filtered, and a resulting filtrate is collected, and

2) The filtrate obtained in 1) is dispersed in water, and the fiber lengths (Li) and the fiber diameters (di) of arbitrary 300 fibers are measured using an optical microscope (magnification: 50 times), respectively. The number of fibers having a fiber length of Li is set to be qi, the weight-average length (Lw) is calculated based on the following equation, and the calculated value is defined as the average fiber length of the fibrous reinforcement.

$$\text{Weight-averaged length (Lw)} = (\Sigma qi \times Li^2)/(\Sigma qi \times Li)$$

In the same manner, the number of fibers having a fiber diameter of Di is set to be ri, the weight-average diameter (Dw) is calculated based on the following equation, and the calculated value is defined as the average fiber diameter of the fibrous reinforcement.

$$\text{Weight-averaged diameter (Dw)} = (\Sigma ri \times Di^2)/(\Sigma ri \times Di)$$

The content of the fibrous reinforcement is not particularly limited, but can be set to be, for example, 15% by mass or more and 70% by mass or less based on the total mass of the polyamide resin composition.

The crystal nucleating agent may enhance the crystallinity of a molded article. Examples of the crystal nucleating agent include: metal salt-based compounds including sodium 2,2-methylenebis(4,6-di-t-butylphenyl)phosphate, aluminum tris(p-t-butylbenzoate), a stearate, and the like; sorbitol-based compounds including bis(p-methylbenzylidene)sorbitol, bis(4-ethylbenzylidene)sorbitol, and the like; and inorganic matters including talc, calcium carbonate, hydrotalcite, and the like. Among these, talc is preferred from the viewpoint of further enhancing the crystallinity of a molded article. One of these crystal nucleating agents may be used alone or two or more thereof may be used in combination.

The content of the crystal nucleating agent is preferably 0.1 parts by mass or more and 5 parts by mass or less, and more preferably 0.1 parts by mass or more and 3 parts by mass or less, based on the total mass of the polyamide resin composition. When the content of the crystal nucleating agent is within the range described above, the crystallinity of a molded article is likely to be sufficiently enhanced, and a sufficient mechanical strength is likely to be obtained.

The lubricant enhances the flowability during injection molding of the polyamide resin composition and makes the appearance of an obtained molded article favorable. The lubricant can be a fatty acid metal salt such as an oxycarboxylic acid metal salt and a higher fatty acid metal salt.

The oxycarboxylic acid constituting the oxycarboxylic acid metal salt may be an aliphatic oxycarboxylic acid or an aromatic oxycarboxylic acid. Examples of the aliphatic oxycarboxylic acid include aliphatic oxycarboxylic acids having 10 or more and 30 or less carbon atoms such as $\alpha$-hydroxymyristic acid, $\alpha$-hydroxypalmitic acid, $\alpha$-hydroxystearic acid, $\alpha$-hydroxyeicosanoic acid, $\alpha$-hydroxydocosanoic acid, $\alpha$-hydroxytetraeicosanoic acid, $\alpha$-hydroxyhexaeicosanoic acid, $\alpha$-hydroxyoctaeicosanoic acid, $\alpha$-hydroxytriacontanoic acid, $\beta$-hydroxymyristic acid, 10-hydroxydecanoic acid, 15-hydroxypentadecanoic acid, 16-hydroxyhexadecanoic acid, 12-hydroxystearic acid, and ricinoleic acid. Examples of the aromatic oxycarboxylic acid include salicylic acid, m-oxybenzoic acid, p-oxybenzoic acid, gallic acid, mandelic acid, and tropic acid.

Examples of the metal constituting the oxycarboxylic acid metal salt include alkali metals such as lithium, and alkaline earth metals such as magnesium, calcium, and barium.

Among these, the oxycarboxylic acid metal salt is preferably a 12-hydroxystearic acid metal salt, and more preferably magnesium 12-hydroxystearate and calcium 12-hydroxy stearate.

Examples of the higher fatty acid constituting the higher fatty acid metal salt include higher fatty acids having 15 or more and 30 or less carbon atoms such as stearic acid, oleic acid, behenic acid, behenic acid, and montanic acid.

Examples of the metal constituting the higher fatty acid metal salt include calcium, magnesium, barium, lithium, aluminum, zinc, sodium, and potassium.

Among these, the higher fatty acid metal salt is preferably calcium stearate, magnesium stearate, barium stearate, calcium behenate, sodium montanate, and calcium montanate.

The content of the lubricant is preferably 0.01% by mass or more and 1.3 % by mass or less based on the total mass of the polyamide resin composition. When the content of the lubricant is 0.01 % by mass or more, the flowability at the time of molding is likely to be enhanced and the appearance characteristic of an obtained molded product is likely to be enhanced. When the content of the lubricant is 1.3 % by mass or less, gas due to decomposition of the lubricant is unlikely to be generated at the time of molding and the appearance of a product is likely to be favorable.

1-5. Manufacturing Method

The polyamide resin composition can be manufactured by a method in which the polyamide resin and other components when needed are mixed by a publicly known resin kneading method, for example, by using a Henschel mixer, a V-blender, a ribbon blender, or a tumbler blender, or can be manufactured by a method in which the mixing is followed by further melt-kneading using a single-screw extruder, a multi-screw extruder, a kneader or a banbury mixer, and then granulating or pulverizing.

2. Applications of Resin Composition

The resin composition of the present disclosure is used as various polyamide molded articles by being molded by a publicly known molding method such as a compression molding method, an injection molding method, and an extrusion molding method.

The molded article of the resin composition of the present disclosure can be used in various applications. Examples of such applications include: exterior automotive parts such as a radiator grille, a rear spoiler, a wheel cover, a wheel cap, a cowl vent grille, an air outlet louver, an air scoop, a hood bulge, a sunroof, a sunroof rail, a fender, and a backdoor; interior parts of an automotive engine compartment such as a cylinder head cover, an engine mount, an air intake manifold, a throttle body, an air intake pipe, a radiator tank, a radiator support, a water pump enclosure such as a water pump, a water pump inlet and a water pump outlet, a water jacket spacer, a thermostat enclosure such as a thermostat housing, a cooling fan, a fan shroud, an oil pan, an oil filter housing, an oil filler cap, an oil level gauge, an oil pump, a timing belt, a timing belt cover, and an engine cover; automotive fuel system parts such as a fuel cap, a fuel filler tube, an automotive fuel tank, a fuel sender module, a fuel cut-off valve, a quick connector, a canister, a fuel delivery pipe, and a fuel filler neck; automotive driving system parts such as a shift lever housing and a propeller shaft; automotive chassis parts such as a stabilizer bar linkage rod and an engine mount bracket; automotive functional parts such as a window regulator, a door lock, a door handle, an outside door mirror stay, a wiper and parts thereof, an accelerator pedal, a pedal module, a joint, a resin screw, a nut, a bushing, a seal ring, a bearing, a bearing retainer, a gear, and an actuator; automotive electronics parts such as a wire harness connector, a relay block, a sensor housing, fuse parts, an encapsulation, an ignition coil, and a distributor cap; fuel system parts for general-purpose apparatuses such as a fuel tank for general-purpose apparatuses (a brushcutter, a lawn mower, and a chain saw); electrical and electronics parts such as a connector and an LED reflector; building material parts; industrial device parts; and various enclosures or exterior parts such as small enclosures (including enclosures of personal computers, mobile phones, and the like) and exterior molded products.

Among these, the resin composition of the present disclosure is suitable for use in an in-vehicle member, in particular a tube through which an antifreeze flows, or the like due to a small decrease in mechanical strength even under a high-temperature and high-humidity environment and therefore can be suitably used for a thermostat enclosure, a water pump enclosure, a water jacket spacer, and the like. Further, the resin composition of the present disclosure can be suitably used for in-vehicle parts for which an environmental temperature becomes 100°C or more, in particular a turbo-related parts and high-voltage system in-vehicle electrical parts. Other than those described above, the resin composition of the present disclosure can be suitably used for automotive electronic parts, electrical and electronics parts, industrial device parts, and parts of electrical devices, such as enclosures of electrical devices or exterior parts.

Examples

Hereinafter, a more detailed description will be given with reference to examples. The scope disclosed herein is not to be construed as limiting by the examples.

Note that, in the following experiments, the melting points (Tm) and the glass transition temperatures (Tg) of the polyamide resins were measured by the following methods.

(Melting Point (Tm) and Glass Transition Temperature (Tg))

The enthalpy of fusion ($\Delta H$), the melting points (Tm) and the glass transition temperatures (Tg) of the polyamide resins were measured using a differential scanning calorimeter (DSC220C type, manufactured by Seiko Instruments Inc.).

Specifically, approximately 5 mg of a polyamide resin were hermetically sealed in an aluminum pan for measurement and heating to 350°C at 10°C/min from room temperature was performed. To allow the resin to melt completely, the resin was held at 360°C for 3 minutes, and then cooled to 30°C at 10°C/min. After allowed to stand at 30°C for 5 minutes, second heating was performed to 360°C at 10° C/min. The temperature (°C) of an endothermic peak in the second heating was defined as the melting point (Tm) of the crystalline polyamide resin, and the displacement point corresponding to the glass transition was defined as the glass transition temperature (Tg) thereof. The enthalpy of fusion ($\Delta H$) was determined from the area of the endothermic peak of crystallization in the first temperature rising process in accordance with JIS K 7122.

(Intrinsic Viscosity [$\eta$])

0.5 g of the polyamide resin were dissolved in 50 ml of a 96.5% sulfuric acid solution, the flow-down time (sec) of the resulting solution under a condition of 25±0.05°C was measured using an Ubbelohde viscometer, and the intrinsic viscosity [$\eta$] of the polyamide resin was calculated based on "equation: [$\eta$] = $\eta$SP/(C(1+0.205$\eta$SP))" where

[$\eta$]: intrinsic viscosity (dl/g),
$\eta$SP: specific viscosity,
C: sample concentration (g/dl),
t: flow-down time (sec) of sample solution,
t0: flow-down time (sec) of blank sulfuric acid, and

$$\eta SP = (t\text{-}t0)/t0.$$

(Enthalpy of Fusion ($\Delta H$))

The enthalpy of fusion ($\Delta H$) of the polyamide resin was determined from the area of an exothermic peak of crystallization in the first temperature rising process in accordance with JIS K 7122 (2012).

1. Synthesis/Preparation of Materials

1-1. Synthesis of Polyamide Resin

(Synthesis Example 1)

An autoclave having an internal capacity of 1 L was charged with 259.5 g (1561.7 mmol) of terephthalic acid, 128.1 g (1102.0 mmol) of 1,6-diaminohexane, 67.2 g (472.3 mmol) of 1,3-bis(aminomethyl)cyclohexane, 0.37 g of sodium hypophosphite monohydrate, and 81.8 g of distilled water, and nitrogen substitution was performed. Agitation was started at 190°C, and the internal temperature of the autoclave was raised to 250°C over 3 hours. At this time, the internal pressure of the autoclave was increased to 3.0 MPa. The reaction was continued for 1 hour as it was, then the autoclave was vented to the atmosphere through a spray nozzle disposed in a lower portion of the autoclave, and a low-order condensate was extracted. Thereafter, this low-order condensate was cooled to room temperature, and then the low-order condensate was pulverized using a pulverizer to have a particle size of 1.5 mm or less, and was dried at 110°C for 24 hours.

Subsequently, this low-order condensate was charged into a plate solid-phase polymerization apparatus. After nitrogen substitution, the temperature was raised to 215°C over approximately 1 hour and 30 minutes. Thereafter, the reaction was continued for 1 hour and 30 minutes, and then the temperature was cooled to room temperature.

The resulting prepolymer was then melt-polymerized with a barrel setting temperature of 330°C, a screw rotation speed of 200 rpm, and a resin feed rate of 6 kg/h by using a twin-screw extruder having a screw diameter of 30 mm and an LID of 36 to obtain polyamide resin 1.

Polyamide resin 1 thus obtained had an intrinsic viscosity [η] of 0.9 dl/g, a melting point (Tm) of 323°C, a glass transition temperature (Tg) of 154°C, and an enthalpy of fusion (ΔH) of 51 mJ/mg.

(Synthesis Example 2)

Polyamide resin 2 was obtained in the same manner as in Synthesis Example 1 except that the amount of 1,6-diaminohexane charged into the autoclave was 118.9 g (1023.1 mmol) and the amount of 1,3-bis(aminomethyl)cyclohexane charged into the autoclave was 78.4 g (551.1 mmol). Polyamide resin 2 had an intrinsic viscosity [η] of 0.9 dl/g, a melting point (Tm) of 320°C, a glass transition temperature (Tg) of 156°C, and an enthalpy of fusion (ΔH) of 48 mJ/mg.

(Synthesis Example 3)

Polyamide resin 3 was obtained in the same manner as in Synthesis Example 1 except that the amount of 1,6-diaminohexane charged into the autoclave was 109.9 g (944.5 mmol) and the amount of 1,3-bis(aminomethyl)cyclohexane charged into the autoclave was 89.5 g (629.7 mmol). Polyamide resin 3 had an intrinsic viscosity [η] of 0.9 dl/g, a melting point (Tm) of 305°C, a glass transition temperature (Tg) of 166°C, and an enthalpy of fusion (ΔH) of 35 mJ/mg.

(Synthesis Example 4)

Polyamide resin 4 was obtained in the same manner as in Synthesis Example 1 except that the amount of 1,6-hexanediamine charged into the autoclave was 280 g (2410 mmol), the amount of terephthalic acid was 277.4 g (1670 mmol), the amount of isophthalic acid was 119.6 g (720 mmol), 3.66 g (30 mmol) of benzoic acid were added, the amount of sodium hypophosphite monohydrate was 5.7 g, and the amount of distilled water was 545 g. Polyamide resin 4 had an intrinsic viscosity [η] of 1.0 dl/g, a melting point (Tm) of 330°C, a glass transition temperature (Tg) of 125°C, and an enthalpy of fusion (ΔH) of 50 J/g.

1-2. Copper-Based Heat-Resistance Stabilizer

A mixture of 10 % by mass of copper (I) iodide and 90 % by mass of potassium iodide was used as the copper-based heat-resistance stabilizer.

1-3. Lubricant

Sodium montanate (LICOMONT NAV101 manufactured by Clariant (Japan) K.K. ("LICOMONT" is a registered trademark of the same company))

1-4. Crystal Nucleating Agent

- Talc

1-5. Reinforcement

- Glass fiber (FT-2A manufactured by Owens Corning (Japan) GK) (glass fiber surface-modified by acid modification)

2. Preparation of Polyamide Resin Composition

The materials described above were mixed at a composition ratio (units are parts by mass) indicated in Tables 1 to 3 using a tumbler blender, and were melt-kneaded under a cylinder temperature condition of 300 to 335°C using a 30 mmφ vented twin-screw extruder. Then the kneaded product was extruded into strands and cooled in a water tank. Thereafter, the strands were collected by a pelletizer and cut to thereby obtain a polyamide resin composition in the form of pellets.

3. Evaluation

The resulting polyamide resin compositions were evaluated with the following criteria.

3-1. Tensile Strength (At Time of High Temperature)

Each polyamide resin composition was injection-molded under the following conditions to prepare an ASTM-1 (dumbbell piece) test piece having a thickness of 3.2 mm.

Molding machine: SE50DU manufactured by Sumitomo Heavy Industries, Ltd.
Molding machine cylinder temperature: melting point of polyamide resin +10°C
Mold temperature: glass transition temperature of polyamide resin + 20°C

The prepared test piece was allowed to stand under a nitrogen atmosphere at a temperature of 23°C for 24 hours in accordance with ASTMD638. Then, a tensile test was conducted under an atmosphere with a temperature of 140°C in accordance with ASTMD63 8 to measure the tensile strength.

3-2. Retention Ratio of Tensile Strength Before and After Blending Copper-Based Stabilizer

The retention ratio of the tensile strength before and after blending the glass fiber was calculated by comparing the foregoing tensile strength of the polyamide resin composition at the high temperature, in which the copper-based stabilizer was blended, with the foregoing tensile strength of the polyamide resin composition at the high temperature, in which the blending amount of the additive was the same except that the copper-based stabilizer was not blended therein.

3-3. Tensile Strength (Initial)

The test piece described above was allowed to stand under a nitrogen atmosphere at a temperature of 23°C for 24 hours in accordance with ASTMD638. Then, a tensile test was conducted at a temperature of 23°C and a relative humidity of 50% in accordance with ASTMD638 to measure the tensile strength.

3-4. Tensile Strength (After High-Temperature Treatment)

The test piece described above was allowed to stand at a temperature of 180°C for 2000 hours. Thereafter, the test piece was allowed to be cooled to 23°C, and a tensile test was conducted under an atmosphere with a temperature of 23°C and a relative humidity of 50% in accordance with ASTMD638 to measure the tensile strength.

3-5. Retention Ratio of Tensile Strength (After High-Temperature Treatment)

The ratio (retention ratio) of the tensile strength after the high-temperature treatment to the initial tensile strength was calculated by comparing the initial tensile strength with the tensile strength after the high-temperature treatment.

3-6. Tensile Strength (After High-Temperature and High-Humidity Treatment)

The test piece described above was allowed to stand at a temperature of 23°C and a relative humidity of 50% for 48 hours. Thereafter, the test piece was allowed to be cooled to 23°C, and a tensile test was conducted under an atmosphere with a temperature of 23°C and a relative humidity of 50% in accordance with ASTMD638 to measure the tensile strength.

3-7. Retention Ratio of Tensile Strength (After High-Temperature and High-Humidity Treatment)

The ratio (retention ratio) of the tensile strength after the high-temperature treatment to the initial tensile strength was calculated by comparing the initial tensile strength with the tensile strength after the high-temperature and high-humidity treatment.

3-8. Flow Length

Each polyamide resin composition was injected using a bar-flow mold having a width of 10 mm and a thickness of 0.5 mm under the following conditions, and the flow length (mm) of each polyamide resin composition in a mold was measured. Note that, it is indicated that the longer the flow length is, the more favorable the flowability during injection molding is.

Molding machine: EC75N-2A manufactured by Shibaura Machine Co., Ltd.
Injection setting pressure: 2000 kg/cm$^2$
Molding machine cylinder temperature: 335°C
Mold temperature: 160°C

3-9. Retention Ratio of Flow Length Before and After Blending Glass Fiber

The retention ratio of the flow length before and after blending the glass fiber was calculated by comparing the foregoing flow length of the polyamide resin composition, in which the copper-based stabilizer and the glass fiber were blended, or of the polyamide resin composition, in which the glass fiber was blended, with the foregoing flow length of the polyamide resin composition, in which the blending amount of the additive was the same except that the glass fiber was not blended therein.

Tables 1 to 3 indicate compositions, tensile strengths (at a high temperature), retention ratios of flow lengths, tensile strengths (initial), tensile strength (after high-temperature treatment) and retention ratios of tensile strengths of the prepared polyamide resin compositions. In Tables 1 to 3, the unit of 100 parts by mass of copper/polyamide resin in the copper-based stabilizer was parts by mass.

[Table 1]

| | | | Ex. | Ex. | Ex. | Comp. Ex. |
|---|---|---|---|---|---|---|
| Experiment No. | | | 1 | 2 | 3 | 4 |
| Formulation | Polyamide resin | Polyamide resin 1 (6T/ 1.3BACT=70/30) | 63.8 | | | |
| | | Polyamide resin 2 (6T/ 1.3BACT=65/35) | | 63.8 | | |
| | | Polyamide resin 3 (6T/ 1.3BACT=60/40) | | | 63.8 | |
| | | Polyamide resin 4 (6T/61=70/30) | | | | 63.8 |
| | Lubricant | Sodium montanate | 0.25 | 0.25 | 0.25 | 0.25 |
| | Crystal nucleating agent | Talc | 0.7 | 0.7 | 0.7 | 0.7 |
| | Copper-based stabilizer | | 0.25 | 0.25 | 0.25 | 0.25 |
| | Reinforcement | Glass fiber | 35 | 35 | 35 | 35 |
| | Copper in copper-based stabilizer /100 parts by mass of polyamide resin | | 0.015 | 0.015 | 0.015 | 0.015 |

(continued)

| | | | Ex. | Ex. | Ex. | Comp. Ex. |
|---|---|---|---|---|---|---|
| Experiment No. | | | 1 | 2 | 3 | 4 |
| Physical properties (polyamide resin) | Melting point (Tm) | (°C) | 323 | 320 | 305 | 330 |
| | Glass transition temperature (Tg) | (°C) | 154 | 156 | 166 | 125 |
| | Tm - Tg | (°C) | 169 | 164 | 139 | 205 |
| Physical properties (composition) | High-temperature tensile strength | (MPa) | 120 | 126 | 132 | 81 |
| | Retention ratio of high-temperature tensile strength | (%) | 90% | 90% | 90% | 70% |
| | Initial tensile strength | (MPa) | 160 | 170 | 190 | 210 |
| | Tensile strength (after high-temperature treatment) | (MPa) | 126 | 133 | 148 | 124 |
| | Retention ratio of tensile strength (after high-temperature treatment) | (%) | 79% | 78% | 78% | 59% |
| | Tensile strength (after high-temperature and high-humidity treatment) | (MPa) | 104 | 111 | 124 | 101 |
| | Retention ratio of tensile strength (after high-temperature and high-humidity treatment) | (%) | 65% | 65% | 65% | 48% |
| | Flow length | (mm) | 30 | 31 | 31 | 23 |
| | Retention ratio of flow length | (%) | 43% | 46% | 46% | 35% |

[Table 2]

| | | | Ref. Ex. | Ref. Ex. | Ref. Ex. | Ref. Ex. |
|---|---|---|---|---|---|---|
| Experiment No. | | | 5 | 6 | 7 | 8 |
| Formulation | Polyamide resin | Polyamide resin 1 (6T/ 1.3BACT=70/30) | 64.05 | | | |
| | | Polyamide resin 2 (6T/ 1.3BACT=65/35) | | 64.05 | | |
| | | Polyamide resin 3 (6T/ 1.3BACT=60/40) | | | 64.05 | |
| | | Polyamide resin 4 (6T/61=70/30) | | | | 64.05 |
| | Lubricant | Sodium montanate | 0.25 | 0.25 | 0.25 | 0.25 |
| | Crystal nucleating agent | Talc | 0.7 | 0.7 | 0.7 | 0.7 |
| | Copper-based stabilizer | | | | | |
| | Reinforcement | Glass fiber | 35 | 35 | 35 | 35 |
| | Copper in copper-based stabilizer /100 parts by mass of polyamide resin | | - | - | - | - |
| Physical properties (polyamide resin) | Melting point (Tm) | (°C) | 323 | 320 | 305 | 330 |
| | Glass transition temperature (Tg) | (°C) | 154 | 156 | 166 | 125 |
| | Tm - Tg | (°C) | 169 | 164 | 139 | 205 |
| Physical properties (composition) | High-temperature tensile strength | (MPa) | 133 | 140 | 147 | 115 |
| | Retention ratio of high-temperature tensile strength | (%) | - | - | - | - |
| | Initial tensile strength | (MPa) | - | - | - | - |
| | Tensile strength (after high-temperature treatment) | (MPa) | - | - | - | - |
| | Retention ratio of tensile strength (after high-temperature treatment) | (%) | - | - | - | - |
| | Tensile strength (after high-temperature and high-humidity treatment) | (MPa) | - | - | - | - |
| | Retention ratio of tensile strength (after high-temperature and high-humidity treatment) | (%) | - | - | - | - |
| | Flow length | (mm) | 23 | 24 | 24 | 19 |
| | Retention ratio of flow length | (%) | 33% | 35% | 36% | 29% |

[Table 3]

| | | | Ref. Ex. | Ref. Ex. | Ref. Ex. | Ref. Ex. |
|---|---|---|---|---|---|---|
| Experiment No. | | | 9 | 10 | 11 | 12 |
| Formulation | Polyamide resin | Polyamide resin 1 (6T/ 1.3BACT=70/30) | 99.05 | | | |
| | | Polyamide resin 2 (6T/ 1.3BACT=65/35) | | 99.05 | | |
| | | Polyamide resin 3 (6T/ 1.3BACT=60/40) | | | 99.05 | |
| | | Polyamide resin 4 (6T/61=70/30) | | | | 99.05 |
| | Lubricant | Sodium montanate | 0.25 | 0.25 | 0.25 | 0.25 |
| | Crystal nucleating agent | Talc | 0.7 | 0.7 | 0.7 | 0.7 |
| | Copper-based stabilizer | | | | | |
| | Reinforcement | Glass fiber | | | | |
| | Copper in copper-based stabilizer /100 parts by mass of polyamide | | - | - | - | - |
| Physical properties (polyamide resin) | Melting point (Tm) | (°C) | 323 | 320 | 305 | 330 |
| | Glass transition temperature (Tg) | (°C) | 154 | 156 | 166 | 125 |
| | Tm - Tg | (°C) | 169 | 164 | 139 | 205 |
| Physical properties (composition) | High-temperature tensile strength | (MPa) | - | - | - | - |
| | Retention ratio of high-temperature tensile strength | (%) | - | - | - | - |
| | Initial tensile strength | (MPa) | - | - | - | - |
| | Tensile strength (after high-temperature treatment) | (MPa) | - | - | - | - |
| | Retention ratio of tensile strength (after high-temperature treatment) | (%) | - | - | - | - |
| | Tensile strength (after high-temperature and high-humidity treatment) | (MPa) | - | - | - | - |
| | Retention ratio of tensile strength (after high-temperature and high-humidity treatment) | (%) | - | - | - | - |
| | Flow length | (mm) | 70 | 68 | 67 | 65 |
| | Retention ratio of flow length | (%) | - | - | - | - |

As is apparent from Tables 1 to 3, the polyamide resin containing the component unit (b2) derived from 1,3-bis(aminomethyl)cyclohexane can suppress a decrease in tensile strength at a high temperature due to the blending of the copper-based heat-resistance stabilizer. Further, the polyamide resin containing the component unit (b2) derived from 1,3-bis(aminomethyl)cyclohexane can suppress a decrease in mechanical strength under a high-temperature and high-humidity environment.

As is apparent from Tables 1 to 3, the polyamide resin containing the component unit (b2) derived from 1,3-bis(aminomethyl)cyclohexane can suppress a decrease in flowability due to the blending of the glass fiber containing the surface treatment agent or the sizing agent, which has an acidic group.

This application claims priority based on Japanese Application No. 2021-044984, filed on March 18, 2021, the contents of which including the claims and specifications are incorporated herein by reference.

Industrial Applicability

The polyamide resin composition of the present disclosure is capable of achieving both improvement in mechanical strength and suppression of a decrease in flowability due to the addition of a copper-based heat-resistance stabilizer. Accordingly, the present disclosure is expected to expand the applicability of polyamide resins to various applications, and to contribute to further popularization of polyamide resins.

**Claims**

1. A polyamide resin composition, comprising:

    a polyamide resin; and
    a copper-based heat-resistance stabilizer, wherein
    the polyamide resin contains:

       a component unit (a) derived from a dicarboxylic acid; and
       a component unit (b) derived from a diamine, wherein
       the component unit (a) derived from the dicarboxylic acid includes a component unit derived from an aromatic dicarboxylic acid or an alicyclic dicarboxylic acid, and
       the component unit (b) derived from the diamine includes:

          more than 50 mol% and 90 mol% or less, based on a total number of moles of the component unit (b) derived from the diamine, of a component unit (b1) derived from an alkylenediamine having 4 or more and 18 or less carbon atoms; and
          10 mol% or more and less than 50 mol%, based on the total number of moles of the component unit (b) derived from the diamine, of a component unit (b2) derived from 1,3-bis(aminomethyl)cyclohexane, and

       a content of copper contained in the copper-based heat-resistance stabilizer is 0.001 parts by mass or more and 0.050 parts by mass or less based on 100 parts by mass of a content of the polyamide resin contained in the polyamide resin composition.

2. The polyamide resin composition according to claim 1, comprising 1 part by mass or more and 300 parts by mass or less, based on 100 parts by mass of the content of the polyamide resin contained in the polyamide resin composition, of glass fiber containing a surface treatment agent having an acidic group or of a sizing agent having an acidic group.

3. The polyamide resin composition according to claim 2, wherein the acidic group is a carboxy group, an acid anhydride group, or an ester group.

4. The polyamide resin composition according to any one of claims 1 to 3, wherein the polyamide resin contains 15 mol% or more and less than 45 mol%, based on the total number of moles of the component unit (b) derived from the diamine, of the component unit (b2) derived from 1,3-bis(aminomethyl)cyclohexane.

5. The polyamide resin composition according to any one of claims 1 to 4, wherein the component unit (b1) derived from the alkylenediamine having 4 or more and 18 or less carbon atoms includes a component unit derived from a linear alkylenediamine or a branched alkylenediamine.

6. The polyamide resin composition according to claim 5, wherein the linear alkylenediamine or the branched alkylenediamine is a diamine selected from the group consisting of 1,4-diaminobutane, 1,6-diaminohexane, 1,9-nonanediamine, 1,10-decanediamine, 2-methyl-1,5-pentanediamine, and 2-methyl-1,8-octanediamine.

7. The polyamide resin composition according to any one of claims 1 to 6, wherein the aromatic dicarboxylic acid or the alicyclic dicarboxylic acid is terephthalic acid, naphthalenedicarboxylic acid or cyclohexanedicarboxylic acid.

8. The polyamide resin composition according to any one of claims 1 to 7, wherein the polyamide resin composition is a resin composition for an in-vehicle member.

9. A polyamide molded article, comprising the polyamide resin composition according to any one of claims 1 to 8.

10. The polyamide molded article according to claim 9, wherein the polyamide molded article is an in-vehicle member.

## INTERNATIONAL SEARCH REPORT

| International application No. |
|---|
| **PCT/JP2022/011811** |

**A. CLASSIFICATION OF SUBJECT MATTER**

*C08L 77/06*(2006.01)i; *C08G 69/26*(2006.01)i; *C08K 3/105*(2018.01)i
FI:   C08L77/06; C08G69/26; C08K3/105

According to International Patent Classification (IPC) or to both national classification and IPC

**B. FIELDS SEARCHED**

Minimum documentation searched (classification system followed by classification symbols)

C08L77/06; C08G69/26; C08K3/105

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2018-178117 A (EMS PATENT AG) 15 November 2018 (2018-11-15) claims, paragraphs [0054]-[0074], [0102]-[0112], examples | 1-10 |
| A | JP 2020-511578 A (ARKEMA FRANCE) 16 April 2020 (2020-04-16) entire text | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 April 2022** | **19 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/011811**

| Patent document cited in search report | | | Publication date (day/month/year) | Patent family member(s) | Publication date (day/month/year) |
|---|---|---|---|---|---|
| JP | 2018-178117 | A | 15 November 2018 | US 2018/0298191 A1 claims, paragraphs [0096]-[0116], [0144]-[0155], examples<br>EP 3392290 A1<br>CA 3001603 A1<br>CN 108727811 A<br>KR 10-2018-0117063 A | |
| JP | 2020-511578 | A | 16 April 2020 | US 2020/0017636 A1 whole document<br>WO 2018/172718 A1<br>EP 3601410 A1<br>FR 3064272 A<br>CN 110446740 A<br>KR 10-2019-0125343 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0632979 A
- JP 49055796 A
- JP 2017075303 A
- JP 2014231452 A
- WO 03085029 A
- JP 2021044984 A